# EUROPÄISCHE PATENTSCHRIFT

(11) **EP 1 772 617 B1**
(45) Veröffentlichungstag und Bekanntmachung des Hinweises auf die Patenterteilung: **01.02.2012**
(21) Anmeldenummer: 06121700.6
(22) Anmeldetag: 04.10.2006
(51) Int. Cl.: F02M 37/22

(54) **Filtereinrichtung, insbesondere zur Flüssigkeitsfilterung in Brennkraftmaschinen**
Filter device, particularly for filtering liquids in internal combustion engines
Dispositif filtrant, en particulier pour filtrage des liquides dans un moteur à combustion interne

(30) Priorität: 05.10.2005 DE 202005015679 U
(43) Veröffentlichungstag der Anmeldung: 11.04.2007
(73) Patentinhaber: MANN+HUMMEL GmbH, 71638 Ludwigsburg (DE)
(72) Erfinder: Kraft, Gunther, 71642, Ludwigsburg (DE); Rösgen, André, 73630, Remshalden (DE); Sturgess, Chris, 70825, Korntal (DE)

(56) Entgegenhaltungen:
- DE-A1- 4 344 983
- DE-A1- 10 315 506
- DE-A1- 19 634 717
- US-A- 4 861 966

## Beschreibung

Die Erfindung bezieht sich auf eine Filtereinrichtung, insbesondere zur Flüssigkeitsfilterung in Brennkraftmaschinen, nach dem Oberbegriff des Anspruches 1.

In der Druckschrift DE 103 33 168 A1 wird ein modularer Kraftstofffilter beschrieben, der ein Filtergehäuse mit einem Gehäusetopf und einem Gehäusedeckel und einem im Filtergehäuse aufgenommenen Filterelement zur Reinigung des zuzuführenden Kraftstoffes umfasst. Das Filterelement ist als Filtereinsatz ausgeführt, welcher ein eigenständiges, vom Filtergehäuse unabhängiges Modul darstellt, das in das Filtergehäuse eingesetzt und bei Bedarf gewechselt wird. Der Filtereinsatz besitzt ein eigenständiges Gehäuse mit darin aufgenommenem Filterelement. Beim Einsetzen des Filtereinsatzes in das Filtergehäuse wird ein Rohrstück am Filtereinsatz mit einem korrespondierenden Anschlussstück am Filtergehäuse verbunden, über das der Zulauf bzw. der Ablauf der zu reinigenden Flüssigkeit erfolgt.

Als weiteres, der Filtereinrichtung zugeordnetes Modul ist ein Verteilermodulgehäuse an der Außenwandung des Filtergehäuses lösbar zu befestigen. In das Verteilermodulgehäuse sind ein Heizelement zum Erwärmen des über den Kraftstoffeinlass in das Verteilermodul eintretenden Kraftstoffes sowie ein Temperatursensor zum Steuern und Regeln des Heizelementes integriert. Das Verteilermodulgehäuse wird über eine Rastverbindung an die Außenwand des Filtergehäuses angehängt.

Der modulare Aufbau der Filtereinrichtung erlaubt einen Austausch einzelner Modulelemente unter Beibehaltung der übrigen Modulelemente. Allerdings zeichnet sich diese Filtereinrichtung durch einen hohen konstruktiven Aufwand auf aus, der insbesondere dadurch entsteht, dass das Filterelement in einem Modulgehäuse angeordnet ist, welches in das Filtergehäuse eingesetzt wird.

Darüber hinaus sind weitere Filtereinrichtungen bekannt, so z.B. aus der DE 101 44 807 A1, bei denen ein hohlzylindrisch ausgeführtes Filterelement unmittelbar in das topfförmige Filtergehäuse eingesetzt wird. Das Filterelement wird radial durchströmt, wobei zur druck- und flüssigkeitsdichten Separierung der Roh- von der Reinseite die Stirnseiten des Filterelementes von Anschlussscheiben abgedeckt sind. Im montierten Zustand ist das hohlzylindrische Filterelement in den Filtertopf des Filtergehäuses eingesetzt und der Deckel auf den Topf aufgesetzt, wobei der Deckel druckdicht mit dem Topf verschlossen wird.

Die DE 196.34.717 beschreibt eine Filtereinrichtung nach dem Oberbegriff des Anspruchs 1.

Der Erfindung liegt die Aufgabe zu Grunde, eine konstruktiv einfach aufgebaute Filtereinrichtung anzugeben, die insbesondere zur Flüssigkeitsfilterung eingesetzt wird und bei der eine gute Dichtigkeit zwischen Roh- und Reinseite des Filterelementes und ggf. auch des Filtergehäuses nach außen gewährleistet ist.

Diese Aufgabe wird erfindungsgemäß mit den Merkmalen des Anspruches 1 gelöst. Die Unteransprüche geben zweckmäßige Weiterbildungen an.

Bei der erfindungsgemäßen Filtereinrichtung bildet der Gehäusedeckel zugleich die stirnseitige Abschlussseite des Filterelementes. Der Gehäusedeckel ist fest mit der Stirnseite des Filterelementes verbunden, was bei Filtergehäusen, die aus Kunststoff bestehen, insbesondere durch ein Anschmelzen des Gehäusedeckels und Andrücken der Stirnseite des Filterelementes in den angeschmolzenen Kunststoff des Deckels erfolgt. Gehäusedeckel und Filterelement sind daraufhin untrennbar miteinander verbunden und bilden eine zusammenhängende Einheit, die bei der Montage des Filterelementes in den Gehäusetopf eingesetzt wird. Die Verbindung zwischen der Unterseite des Gehäusedeckels und der Stirnseite des Filterelementes ist druck- und strömungsdicht, sodass die Roh- von der Reinseite des Filterelementes unter allen regulären Bedingungen sicher separiert und ein versehentliches Überströmen des zu reinigenden Mediums ausgeschlossen ist. Die Verbindung zwischen Gehäusedeckel und Stirnseite des Filterelementes kann in einfacher Weise hergestellt werden. Außerdem werden durch den Verbund von Deckel und Filterelement die Montage sowie ggf. auch der Austausch von Gehäusedeckel und Filterelement erleichtert.

In einer zweckmäßigen Weiterbildung ist vorgesehen, dass auch der Gehäusedeckel nach dem Aufsetzen auf den Gehäusetopf mit dem stirnseitigen Rand des Gehäusetopfes fest verbunden, insbesondere verschweißt wird. Diese Ausführung eignet sich in besonderer Weise für Filtereinrichtungen, deren Gehäuse komplett aus Kunststoff und deren Filterelement aus einem recycelbaren, insbesondere vollständig veraschbaren Material wie z.B. Filterpapier besteht. Nachdem der Gehäusedeckel fest und insbesondere unlösbar mit dem Gehäusetopf verbunden worden ist, bildet die Filtereinrichtung eine Einheit, die nur insgesamt ausgetauscht werden kann. Zur Entsorgung der Filtereinrichtung wird diese zweckmäßig entsorgt, insbesondere verbrannt. Da in dieser Ausführung sowohl eine druck- und strömungsdichte Verbindung zwischen dem Gehäusedeckel und dem Filterelement als auch zwischen dem Gehäusetopf und dem Gehäusedeckel besteht, kann auf zusätzliche Dichtungsmaßnahmen, insbesondere auf Dichtringe verzichtet werden.

Die Dichtheit der Filtereinrichtung ist somit unter allen Einsatztemperaturen gewährleistet, wodurch Probleme vermieden werden, die bei der Verwendung von Dichtringen auf Grund der großen druckbeaufschlagten Flächen mit relaxierendem Werkstoff auftreten können. Dichtungen müssen lediglich im Bereich der Anschlüsse für den Zulauf zu reinigender Flüssigkeit und den Ablauf der bereits gereinigten Flüssigkeit vorgesehen werden. Aufgrund des verhältnismäßig geringen Durchmessers der Zu- und Ablaufstutzen kann die Dichtigkeit ohne Probleme sichergestellt werden.

In einer zweckmäßigen Weiterbildung ist vorgesehen, dass der Gehäusedeckel der Filtereinrichtung lösbar mit einem Zusatzmodul, insbesondere mit einem Heizmodul zur Flüssigkeitserwärmung verbunden ist. Dieses Zusatzbauteil kann über die Heizfunktion hinaus auch eine Haltefunktion für die Filtereinrichtung übernehmen, indem die gesamte Filtereinrichtung über dieses Zusatzbauteil am Kraftfahrzeug zu befestigen ist. Hierdurch wird der austauschbare Charakter der Filtereinrichtung unterstrichen, die vorteilhaft insgesamt ein austauschbares Modul bildet, welches ausschließlich über das Heizmodul mit dem Kraftfahrzeug verbunden werden kann. Dieses Heizmodul umfasst zweckmäßig auch die erforderlichen Anschlüsse für den Zulauf und die Abfuhr von Flüssigkeit in die bzw. aus der Filtereinrichtung. Gegebenenfalls umfasst das Heizmodul als weitere Funktionsbauteile auch eine Temperatursteuerung, einen Temperatursensor, einen Drucksensor und einen Wassersensor.

An den Gehäusedeckel kann ein Zulaufstutzen für die Zufuhr von zu reinigender Flüssigkeit sowie ein Ablaufstutzen für die Ableitung der gereinigten Flüssigkeit angespritzt sein. In dieser Ausführung bilden Zulaufstutzen und Ablaufstutzen mit dem Gehäusedeckel ein gemeinsames Bauteil, wobei im Falle einer Kombination mit dem Heizmodul der Zulaufstutzen sowie der Ablaufstutzen entweder mit korrespondierenden Stutzen in dem Heizmodul verbunden werden oder lediglich über das Heizmodul die Filtereinrichtung gehalten und in die gewünschte Position gebracht wird, die korrespondierenden Stutzen jedoch an einem weiteren Bauteil des Kraftfahrzeugs angeordnet sind.

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch eine erfindungsgemäße Filtereinrichtung mit einem Gehäusetopf, einem darin aufgenommenen, hohlzylindrischen Filterelement und einem Gehäusedeckel, der sowohl fest mit der Stirnseite des Filterelementes als auch fest mit dem umlaufenden Rand des Gehäusetopfes verbunden ist, sowie mit einem Heizmodul auf der Außenseite des Gehäusedeckels,

Fig. 2 einen Schnitt durch eine Filtereinrichtung in einer weiteren Ausführung.

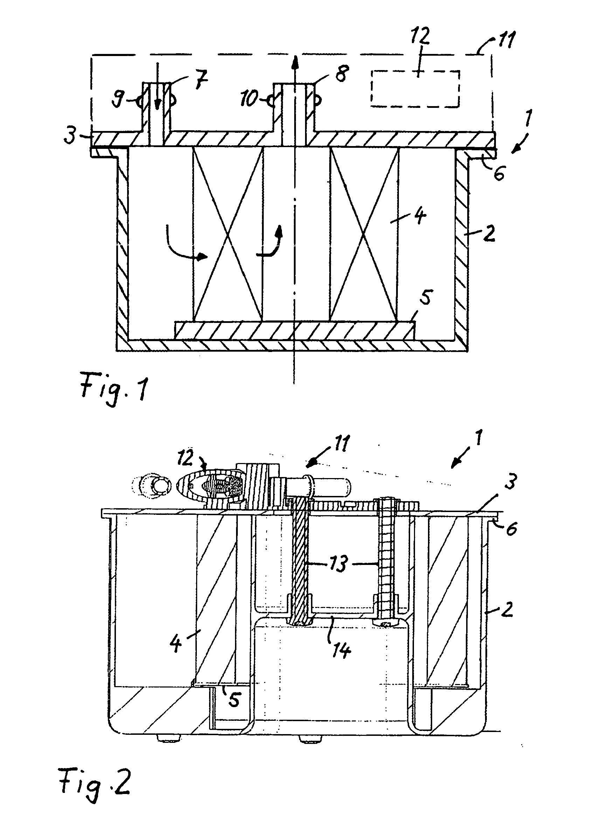

In Fig. 1 ist eine Filtereinrichtung zur Flüssigkeitsfilterung in Brennkraftmaschinen, insbesondere zur Kraftstofffilterung, dargestellt. Die Filtereinrichtung 1 weist ein aus Kunststoff bestehendes Filtergehäuse auf, das einen Gehäusetopf 2 und einen Gehäusedeckel 3 umfasst. In den Gehäusetopf 2 ist ein Filterelement 4 eingesetzt, das hohlzylindrisch ausgebildet ist und aus einem recycelbaren, insbesondere vollständig veraschbaren Material, besteht; das Filterelement 4 ist zweckmäßig als Papierfilter oder Mehrlagenmedium ausgeführt. Das hohlzylindrische Filterelement 4 wird radial von der zu reinigenden Flüssigkeit durchströmt. Die untere Stirnseite des Filterelementes 4 ist von einer Endscheibe 5 abgedichtet, die zweckmäßig ebenfalls aus einem recycelbaren Kunststoff besteht und strömungs- und druckdicht mit der Stirnseite des Filterelementes 4 verbunden ist. Die Endscheibe 5 liegt auf dem Boden des Gehäusetopfes 2 auf. Bei anderen Ausgestaltungen kontaktiert die Endscheibe 5 den Boden des Gehäusetopfes 2 nicht. Hierbei wird die Endscheibe 5 ausschließlich über das Filterelement 4 gehalten, so dass die Endscheibe 5 umströmbar ist.

Die oben liegende Stirnseite des Filterelements 4 ist fest mit dem Gehäusedeckel 3 verbunden, derart, dass ein strömungsdichter und druckdichter Abschluss zwischen Deckel und Filterelement hergestellt ist. Auf eine zusätzliche, stirnseitige Endscheibe, die auf die obere Stirnseite des Filterelementes 4 aufgesetzt werden müsste, kann daher verzichtet werden. Die Verbindung zwischen der Stirnseite des Filterelementes 4 und der Unterseite des Gehäusedeckels 3 erfolgt zweckmäßig dadurch, dass der aus Kunststoff bestehende Gehäusedeckel 3 an seiner Unterseite angeschmolzen wird und die Stirnseite des Filterelementes 4 in den angeschmolzenen Kunststoff hineingedrückt wird.

Der obere Rand des Gehäusetopfes 2 ist von einer umlaufenden Schulter 6 gebildet, die eine Auflagefläche für den aufzusetzenden Gehäusedeckel 3 bildet. Die Oberseite der umlaufenden Schulter 6 und die Unterseite des Gehäusedeckels 3 werden vorteilhaft ebenfalls durch Anschmelzen entweder der Schulter oder des Deckels oder beider Bauteile fest miteinander verbunden, wodurch ein strömungs- und druckdichter Abschluss zwischen Gehäusetopf 2 und Gehäusedeckel 3 gebildet ist und auf zusätzliche Dichtungselemente verzichtet werden kann.

An den Gehäusedeckel 3 ist ein Zulaufstutzen 7 und ein Ablaufstutzen 8 angespritzt. In der dargestellten Ausführung befindet sich der Zulaufstutzen 7 exzentrisch im Gehäusedeckel 3, wohingegen der Ablaufstutzen 8 genau in der Mitte des Gehäusedeckels 3 angeordnet ist. In dieser Ausführung erfolgt die Zuleitung der zu reinigenden Flüssigkeit über die radiale Außenseite des Filterelementes 4, das radial von außen nach innen durchströmt wird, wobei die gereinigte Flüssigkeit axial über den Innenraum des Filterelementes 4 und den mit dem Innenraum kommunizierenden Ablaufstutzen 8 abgeleitet wird. An den Stutzen 7 und 8 sind außen liegende Dichtringe 9 und 10 angeordnet, um bei einem Anschluss der Stutzen 7 und 8 an korrespondierende Leitungsabschnitte einen strömungs- und druckdichten Abschluss herzustellen.

Auf der Oberseite des Gehäusedeckels 3 ist ein Heizmodul 11 angeordnet, über das die Flüssigkeit vor Einleitung in die Filtereinrichtung zunächst vorgewärmt wird. Symbolisch ist mit Bezugszeichen 12 bezeichnet ein Funktionsblock in das Heizmodul 11 eingetragen, der das Heizelement enthält und darüber hinaus auch weitere Funktionsbauteile, wie z.B. eine Temperatursteuerung, einen Temperatursensor, einen Drucksensor und/oder einen Wassersensor aufweisen kann. Der Gehäusedeckel 3 wird lösbar mit dem Heizmodul 11 verbunden, wobei zweckmäßig über diese Verbindung hinaus keine weiteren Verbindungen der Filtereinrichtung 1 zum Kraftfahrzeug bzw. der Brennkraftmaschine vorgesehen sind. Auf diese Weise ist es ausreichend, die gesamte Filtereinrichtung 1 lediglich über die lösbare Verbindung zwischen dem Heizmodul 11 und dem Gehäusedeckel 3 der Filtereinrichtung an der gewünschten Position im Kraftfahrzeug zu halten.

In Fig. 2 ist eine Variante der Filtereinrichtung 1 dargestellt. Das hohlzylindrische Filterelement 4 ist an seiner unteren Stirnseite von der Endscheibe 5 abgeschlossen, die gegenüberliegende, oben liegende Stirnseite des Filterelementes ist fest mit dem Gehäusedeckel 3 verbunden, der außerdem auf der umlaufenden Schulter 6 am oberen, stirnseitigen Rand des Gehäusetopfes 2 aufliegt und mit der Schulter 6 ebenfalls fest verbunden ist.

Im Unterschied zum vorhergehenden Ausführungsbeispiel ist aber das Heizmodul 11 einschließlich Funktionsblock 12, das sich auf der Oberseite des Gehäusedeckels 3 befindet, über Verbindungselemente 13, die beispielsweise als Schrauben ausgeführt sind, mit dem Gehäusetopf 2 gekoppelt. Hierfür ragen die Verbindungselemente 13 durch Ausnehmungen im Gehäusedeckel 3 hindurch und sind bis zu einem nach oben versetzten Gehäuseabschnitt 14, der Bestandteil des Gehäusetopfes 2 ist, geführt.

## Patentansprüche

1. Filtereinrichtung, insbesondere zur Flüssigkeitsfilterung in Brennkraftmaschinen, mit einem aus Kunststoff bestehendem Filtergehäuse, umfassend einen Gehäusetopf (2) und einen Gehäusedeckel (3), und mit einem in das Filtergehäuse einzusetzenden, von der zu reinigenden Flüssigkeit zu durchströmenden hohlzylindrischen Filterelement (4), wobei an den Gehäusedeckel (3) ein Zulaufstutzen (7) und ein Ablaufstutzen (8) angespritzt ist und der Gehäusedeckel (3) fest mit einer Stirnseite des Filterelements (4) verbunden ist und die stirnseitige Abschlussscheibe des Filterelements (4) bildet **dadurch gekennzeichnet, dass** der Gehäusedeckel (3) lösbar mit einem Heizmodul (11) zur Flüssigkeitserwärmung zu verbinden ist, in welches weitere Funktionsbauteile wie Temperatursteuerung, Temperatursensor, Drucksensor und/oder Wassersensor integriert sind, wobei der Zulaufstutzen (7) exzentrisch im Gehäusedeckel (3) und der Ablaufstutzen (8) in der Mitte des Gehäusedeckels (3) angeordnet ist und an den Stutzen (7, 8) außenliegende Dichtringe (9, 10) zum strömungs- und druckdichten Anschluss an korrespondierende Leitungsabschnitte angeordnet sind, wobei die Zuleitung der zu reinigenden Flüssigkeit über die radiale Außenseite des Filterelementes (4) erfolgt, das radial von außen nach innen durchströmt wird, wobei die gereinigte Flüssigkeit axial über den Innenraum des Filterelementes (4) und den mit dem Innenraum kommunizierenden Ablaufstutzen (8) abgeleitet wird.

2. Filtereinrichtung nach Anspruch 1, **dadurch gekennzeichnet, dass** die Stirnseite des Filterelements (4) mit dem Gehäusedeckel (3) verschweißt ist.

3. Filtereinrichtung nach Anspruch 2, **dadurch gekennzeichnet, dass** der auf den Gehäusetopf (2) aufgesetzte Gehäusedeckel (3) mit dem stirnseitigen Rand des Gehäusetopfes (2) verschweißt wird.

4. Filtereinrichtung nach einem der Ansprüche 1 bis 3, **dadurch gekennzeichnet, dass** die dem Gehäusedeckel (3) abgewandte Stirnseite des Filterelements (4) von einer Endscheibe (5) abgedeckt ist, die fest mit dem Filterelement (4) verbunden ist, insbesondere verschweißt ist.

5. Filtereinrichtung nach einem der Ansprüche 1 bis 4, **dadurch gekennzeichnet, dass** an den Gehäusedeckel (3) ein Zulaufstutzen (7) für die Zufuhr zu reinigender Flüssigkeit und ein Ablaufstutzen (8) für die Ableitung gereinigter Flüssigkeit angespritzt ist.

6. Filtereinrichtung nach Anspruch 5, **dadurch gekennzeichnet, dass** am Zulaufstutzen (7) und am Ablaufstutzen (8) jeweils ein Dichtring (9 bzw. 10) angeordnet ist.

7. Filtereinrichtung nach einem der Ansprüche 1 bis 6, **dadurch gekennzeichnet, dass** sämtliche Bauelemente der Filtereinrichtung (1) aus voll veraschbarem Material bestehen.

## Claims

1. Filtering device, in particular for filtering liquids in internal combustion engines, with a filter housing made of synthetic material, comprising a housing pot (2) and a housing cover (3), and a hollow-cylindrical filter element (4) to be inserted into the filter housing and to be flowed through by the liquid to be cleaned, an inlet connection (7) and an outlet connection (5) being injected onto the housing cover (3) and the housing cover (3) being firmly connected with an end face of the filter element (4) and forming the frontal closure lid of the filter element (4), **characterized in that** the housing cover (3) is to be connected detachably with a heating module (11) for heating the liquid into which other functional components such as temperature control, temperature sensor, pressure sensor and/or water sensor are integrated, the inlet connection (7) being disposed eccentrically in the housing cover (3) and the outlet connection (8) being disposed in the middle of the housing cover (3) and external seal rings (9, 10) being disposed at the connections (7, 8) for being connected flow- and pressure-proof to corresponding duct sections, the supply of the liquid to be cleaned is realized via the radial outer side of the filter element (4) which is flowed through radially from the exterior to the interior, the cleaned liquid being discharged axially via the interior area of the filter element (4) and the outlet connection (8) communicating with the interior area.

2. Filtering device according to claim 1, **characterized in that** the end face of the filter element (4) is welded with the housing cover (3).

3. Filtering device according to claim 2, **characterized in that** the housing cover (3) placed on the housing pot (2) is welded with the frontal edge of the housing pot (2).

4. Filtering device according to one of the claims 1 to 3, **characterized in that** the end face of the filter element (4) facing away from the housing cover (3) is covered by an end plate (5) which is firmly connected with the filter element (4), in particular welded.

5. Filtering device according to one of the claims 1 to 4, **characterized in that** an inlet connection (7) for the supply of liquid to be cleaned and an outlet connection (8) for discharging cleaned liquid is injected onto the housing cover (3).

6. Filtering device according to claim 5, **characterized in that** a seal ring each (9 and 10 respectively) is disposed at the inlet connection (7) and at the outlet connection (8).

7. Filtering device according to one of the claims 1 to 6, **characterized in that** all components of the filtering device (1) are made of fully incinerable material.

## Revendications

1. Dispositif de filtration, notamment pour le filtrage de liquide dans des moteurs à combustion interne, avec un boîtier de filtre en matière plastique, comprenant un pot de boîtier (2) et un couvercle de boîtier (3), et avec un élément filtrant (4) en forme de cylindre creux devant être inséré dans le boîtier de filtre et traversé par le liquide à purifier, une tubulure d'admission (7) et une tubulure d'écoulement (8) étant injectées sur le couvercle de boîtier (3) et le couvercle de boîtier (3) étant relié de manière fixe à une face frontale de l'élément filtrant (4) et formant le disque de raccordement frontal de l'élément filtrant (4), **caractérisé en ce que** le couvercle de boîtier (3) doit être relié de manière amovible à un module de chauffage (11) destiné à chauffer le liquide dans lequel d'autres éléments fonctionnels, comme une commande de température, une sonde de température, un manostat et/ou un détecteur d'eau, sont intégrés, la tubulure d'admission (7) étant placée de façon excentrique dans le couvercle de boîtier (3) et la tubulure d'écoulement (8) étant disposée au milieu du couvercle de boîtier (3), et des bagues d'étanchéité (9, 10) extérieures étant disposées sur les tubulures (7, 8) pour former un raccord étanche au flux et à la pression aux sections de conduit correspondantes, l'amenée du liquide devant être purifié s'opérant par la face extérieure radiale de l'élément filtrant (4), laquelle est traversée par le flux en sens radial de l'extérieur vers l'intérieur, le liquide purifié étant évacué en sens axial par l'espace intérieur de l'élément filtrant (4) et par la tubulure d'écoulement (8) communiquant avec l'espace intérieur.

2. Dispositif de filtration selon la revendication 1, **caractérisé en ce que** la face frontale de l'élément filtrant (4) est soudée avec le couvercle de boîtier (3).

3. Dispositif de filtration selon la revendication 2, **caractérisé en ce que** le couvercle de boîtier (3) monté sur le pot de boîtier (2) est soudé avec le bord frontal du pot de boîtier (2).

4. Dispositif de filtration selon l'une des revendications 1 à 3, **caractérisé en ce que** la face frontale de l'élément filtrant (4) orientée à l'opposé du couvercle de boîtier (3) est recouverte par un disque d'extrémité (5) qui est relié de manière fixe, notamment soudé, avec l'élément filtrant (4).

5. Dispositif de filtration selon l'une des revendications 1 à 4, **caractérisé en ce qu'**une tubulure d'admission (7) destinée à amener le liquide à purifier et une tubulure d'écoulement (8) destinée à évacuer le liquide purifié sont injectées sur le couvercle de boîtier (3).

6. Dispositif de filtration selon la revendication 6, **caractérisé en ce que** respectivement une bague d'étanchéité (9 ou 10) est disposée sur la tubulure d'admission (7) et sur la tubulure d'écoulement (8).

7. Dispositif de filtration selon l'une des revendications 1 à 6, **caractérisé en ce que** l'intégralité des composants du dispositif de filtration (1) sont composés d'un matériau pouvant être entièrement mis en cendres.
